# EUROPÄISCHE PATENTSCHRIFT

(11) **EP 0 408 130 B1**
(45) Veröffentlichungstag und Bekanntmachung des Hinweises auf die Patenterteilung: **24.01.1996**
(21) Anmeldenummer: 90201816.7
(22) Anmeldetag: 06.07.1990
(51) Int. Cl.: H04J 3/07, H04L 25/36

(54) **Anordnung zur Bitratenanpassung zweier Signale**
Device for adapting the bit rate of two signals
Dispositif d'adaptation du débit binaire de deux signaux

(30) Priorität: 12.07.1989 DE 3922897
(43) Veröffentlichungstag der Anmeldung: 16.01.1991
(73) Patentinhaber: Philips Patentverwaltung GmbH, D-22335 Hamburg (DE); Philips Electronics N.V., NL-5621 BA Eindhoven (NL)
(72) Erfinder: Urbansky, Ralph, Dipl.-Ing., D-8501 Schwaig 2 (DE)
(74) Vertreter: Peuckert, Hermann, Dipl.-Ing.

(56) Entgegenhaltungen:
- DE-A- 3 315 372
- DE-A- 3 843 372
- US-A- 3 830 981
- US-A- 4 002 844
- US-A- 4 546 429

## Beschreibung

Die Erfindung bezieht sich auf eine Anordnung zur Bitratenanpassung zweier Signale. Die Schaltungsanordnung zur Bitratenanpassung enthält unter anderem einen elastischen Speicher, in den die Daten eines ersten Signals in Gruppen von je n Bits parallel eingeschrieben und wieder parallel ausgelesen werden, wobei dem elastischen Speicher eine Auswahlmatrix zur Einfügung von Stopfbits nachgeschaltet ist, und der Schreibvorgang durch einen Schreibzähler und der Lesevorgang durch einen Lesezähler gesteuert wird, sowie einem Subtrahierer, der die Differenz der Zählerstände bildet.

Eine derartige Schaltungsanordnung zur Bitratenanpassung ist aus der nicht vorveröffentlichten europäischen Patentanmeldung EP-0 404 268 A2 bekannt. Diese Schaltungsanordnung enthält einen elastischen Speicher, dem jeweils 8 Bit parallel von einem Serien-Parallel-Wandler zugeführt werden. Die in dem elastischen Speicher gepufferten Bits werden einer Auswahlmatrix geliefert, die Verzögerungsglieder und Auswahlschaltungen enthält. Wenn ein Stopfbit in dem von der Auswahlmatrix gelieferten Signal eingefügt worden ist, werden die Auswahlschaltungen so gesteuert, daß bei der nächsten Lieferung der parallelen Bits an den Ausgang der Auswahlmatrix das Bit, das wegen der Sendung des Stopfbits verzögert worden ist, dann geliefert wird. Um die Stopfzeitpunkte zu erfahren, ist des weiteren in der bekannten Schaltungsanordnung eine Füllstandsüberwachung für den elastischen Speicher und ein Phasenvergleich zwischen einem Schreibtakt, der dem die Schreibadressen erzeugenden Schreibzähler geliefert wird, und einem Lesetakt, der dem die Leseadressen erzeugenden Lesezähler geliefert wird, vorgesehen. Eine Steuervorrichtung erzeugt ein Signal für die Auswahlmatrix und zu bestimmten Zeitpunkten ein Anhaltesignal für den Lesezähler.

Solche Schaltungsanordnungen werden zum Beispiel bei plesiochronen Multiplexern benötigt, die plesiochrone Signale bündeln. Zwei binäre Signale heißen plesiochron, wenn ihre Bitraten nominell gleich sind, tatsächlich aber innerhalb einer gegebenen Toleranz vom Nennwert abweichen können. Bevor plesiochrone Signale durch einen plesiochronen Multiplexer zusammengefaßt werden können, müssen sie alle auf die gleiche Bitrate gebracht werden, die (bei sogenannter positiver Stopftechnik) etwas höher liegt als die Bitrate, die die einzelnen plesiochronen Signale haben. Dieser Bitratenunterschied wird unter anderem dadurch ausgeglichen, daß in das Signal höherer Bitrate von Zeit zu Zeit zusätzlich sogenannte Stopfbits aufgenommen werden. Eine Schaltungsanordnung, die derartige Operationen durchführt, wird auch Taktanpassungsschaltung genannt.

Auf der Empfängerseite eines Übertragungssystems ist eine entsprechende Schaltungsanordnung einem plesiochronen Multiplexer nachzuschalten, um die Stopfbits wieder zu entfernen und die Bitrate auf ihren ursprünglichen Wert zu bringen. Stopfentscheidungsschaltungen für Schaltungsanordnungen zur Anpassung der Bitraten zweier Binärsignale, bei denen die Signale seriell in einen elastischen Speicher eingelesen und ebenso wieder aus ihm ausgelesen werden, sind bekannt (vergleiche z.B. DT 25 18 051 A1).

Soll eine derartige Schaltungsanordnung für Bitraten in der Größenordnung von 140 Mbit/s und darüber eingesetzt werden, so muß sie - einschließlich der Stopfentscheidungsschaltung - in ECL-Technologie ausgeführt werden. Bei Schaltungen in ECL-Technologie treten jedoch höhere Verlustleistungen auf als bei vergleichbaren Schaltungen in CMOS-Technologie.

Aus der DE-A-33 15 372 ist noch eine Anordnung zur Umsetzung eines anisochronen binären Eingangssignals in ein isochrones binäres Ausgangssignal bekannt, die zur Taktanpassung bei der Demultiplex-Bildung in plesiochronen Zeitmultiplexsystemen eingesetzt wird. Die wesentlichen Bestandteile der Anordnung sind ein elastischer Speicher und ein Phasenregelkreis, durch den das Auslesen von Bits des Eingangssignals aus dem elastischen Speicher gesteuert wird. Zusätzlich ist noch ein Regler mit integrierendem Verhalten in den Phasenregelkreis eingefügt.

Weiter ist aus der US-A-4 002 844 eine Multiplexeranordnung für asynchrone digitale Signale bekannt. Ankommende digitale Signale werden jeweils in Kanalelementen mit Stopfbits versehen. In einem Kanalelement ist hierzu ein elastischer Speicher (buffer memory), zwei Zähler (counter) und ein Phasenregelkreis mit Phasenkomparator (phase comparator) und eine Stopfentscheidungsschaltung (justification order circuit) vorhanden.

Der Erfindung liegt die Aufgabe zugrunde, eine andere Anordnung zur Bitratenanpassung zweier Signale der eingangs erläuterten Art anzugeben.

Diese Aufgabe wird durch eine Anordnung zur Bitratenanpassung zweier Signale durch folgende Maßnahmen gelöst: Die Anordnung zur Bitratenanpassung enthält
- einen elastischen Speicher (4) zur parallelen Einschreibung und zur parallelen Auslesung von Gruppen von je n Bits, n > 1, eines ersten Signals,
- ein Mittel (12) zur Erzeugung von Schreibadressen,
- ein Mittel (13) zur Erzeugung von Leseadressen,
- einen Subtrahierer (9) zur Bildung der Differenz zwischen Lese- und Schreibadressen,
- eine das zweite Signal erzeugende Auswahlmatrix (5) zum Empfang der ausgelesenen Gruppen von Bits des elastischen Speichers,
- eine Stopfentscheidungsschaltung (24), die
   - einen Regelkreis mit dem Subtrahierer (9) und dem Mittel (13) zur Erzeugung von Leseadressen bildet,
   - einen Regler (17) mit I-Verhalten zum Empfang des Ausgangssignals des Subtrahierers (9) enthält und
   - eine Impulsverteilerschaltung (19) enthält, die bei einem Übertrag an einer vorbestimmten Binärstelle im Ausgangssignal des Reglers (17) zur Abgabe einer Stopfinformation und zur Abgabe eines Signals an die Auswahlmatrix (5) zur Einfügung eines Stopfbits und bei Überschreitung der Anzahl der eingefügten Stopfbits um ein ganzes Vielfaches von n zum Anhalten des Mittels (13) zur Erzeugung von Leseadressen vorgesehen ist, und
- wobei die Auswahlmatrix derart ausgestaltet ist, daß bei Empfang des Signals von der Impulsverteilerschaltung (19) bestimmte Bits von aufeinanderfolgenden Gruppen paralleler Bits verzögert und Stopfbits anstelle der bestimmten Bits eingefügt werden.

Wie weiter unten noch ausführlicher dargestellt wird, ist die Zahl n die Anzahl der parallelen Leitungen, über die n Bits eines ersten Signals parallel in den Pufferspeicher eingeschrieben werden. Auf die gleiche Weise werden die n parallelen Bits mit gleicher Nutzbitrate aus dem Pufferspeicher wieder ausgelesen. Die Mittel zum Erzeugen von Schreib- und Leseadressen (Schreib- und Lesezähler) werden mit Takten getaktet, die sich durch Untersetzung der Bittakte beider Signale im Verhältnis 1;n ergeben. Die erfindungsgemäße Stopfentscheidungsschaltung benötigt prinzipiell keinen schnelleren Takt als einen dieser im Verhältnis 1:n untersetzten Bittakte. Bei gegebenen Bittakten ist daher die Zahl n nur groß genug zu wählen, damit die erfindungsgemäße Stopfentscheidungsschaltung in CMOS-Technologie ausgeführt werden kann. Liegen beispielsweise die Bittakte in der Größenordnung von 140 MHz und wird byteweise abgespeichert (n = 8), so braucht die erfindungsgemäße Anordnung prinzipiell nur Taktfrequenzen von rund 20 MHz, ist also bequem in CMOS-Technologie ausführbar.

Die Impulsverteilerschaltung ist nach Auftreten eines ersten Synchronimpulses zur Abgabe der Stopfinformation und nach Auftreten eines zweiten, darauffolgenden Synchronimpulses zur Lieferung eines Signals zur Einfügung von Stopfbits an die Auswahlmatrix und eines Signals zum Anhalten des Mittels zum Erzeugen von Leseadressen vorgesehen, wenn die Anzahl der eingefügten Stopfbits größer als n ist. Die Synchronimpulse werden von außen der Anordnung zugeführt.

Eine Ausführungsform der Impulsverteilerschaltung enthält
- einen zweiten Vorwärts-Rückwärts-Zähler, der zur Zählung der Überträge an der vorbestimmten Binärstelle im Ausgangssignal des Reglers und zur gleichzeitigen Berücksichtigung des Vorzeichens des Ausgangssignals vorgesehen ist,
- einen Übertragsspeicher zur Speicherung des Inhaltes des zweiten Zählers sowie des Übertrages und
- einen Zwischenspeicher, der zur Speicherung des von dem Übertragungsspeichers gelieferten Übertrages mit dem ersten Synchronimpuls und einem weiteren Zwischenspeicher zur Speicherung des restlichen Inhalts des Übertragungsspeichers mit dem zweiten Synchronimpuls vorgesehen ist.

Um zu verhindern, daß bei einer großen Regelzeitkonstante der elastische Speicher überläuft, ist ein Gatter zur Bildung der Differenz zwischen den Binärwerten am Eingang und am Ausgang für das höchstwertige Bit des Zwischenspeichers vorgesehen. Der Regler empfängt diese Differenz als Eingangsdaten.

Die erfindungsgemäße Lehre ist auch noch für den Fall n = 1 ausführbar - also bei rein serieller Verarbeitung der beiden Signale - wenn für diesen Fall die erwähnte Auswahlmatrix z.B. als unveränderbarer Vierpol mit einer Einheitsmatrix als Vierpolmatrix angesehen wird.

In diesem Fall wird die Aufgabe durch eine Anordnung zur Bitratenanpassung zweier serieller Signale durch folgende Maßnahmen gelöst:
Die Anordnung zur Bitratenanpassung enthält
- einem elastischen Speicher zur Einschreibung von Bits eines ersten seriellen Signals und zur Auslesung von. Bits eines zweiten seriellen Signals,
- einem Mittel zur Erzeugung von Schreibadressen,
- einem Mittel zur Erzeugung von Leseadressen,
- einem Subtrahierer zur Bildung der Differenz zwischen Lese- und Schreibadressen,
- einer Stopfentscheidungsschaltung, die
   - einen Regelkreises mit dem Subtrahierer und dem Mittel zur Erzeugung von Leseadressen bildet,
   - einen Regler mit I-Verhalten zum Empfang des Ausgangssignals des Subtrahierers und
   - eine Impulsverteilerschaltung enthält, die bei einem Übertrag an einer vorbestimmten Binärstelle im Ausgangssignal des Reglers zur Abgabe einer Stopfinformation und zum Anhalten des Mittels zur Erzeugung von Leseadressen vorgesehen ist.

Des weiteren ist bei dieser Anordnung zur Bitratenanpassung zweier serieller Signale die Impulsverteilerschaltung nach Auftreten eines ersten Synchronimpulses zur Abgabe der Stopfinformation und nach Auftreten eines zweiten, darauffolgenden Synchronimpulses zur Lieferung eines Signals zum Anhalten des Mittels zum Erzeugen von Leseadressen vorgesehen.

Eine Ausführungsform des Reglers besteht aus einem Addierer, einem nachgeschalteten Speicher und einem auf den Speicher folgenden Vorwärts-Rückwärts-Zähler. Speicher und Addierer sind so miteinander gekoppelt, daß die laufenden Differenzen des Subtrahierers im Speicher akkumuliert werden, und der erste Zähler einen Vorwärtszählimpuls erhält, wenn der Speicher positiv überläuft und einen Rückwärtszählimpuls wenn der Speicher negativ überläuft.
- weiter auf Seite 4 der ursprünglichen Beschreibung -

Anhand der Figuren und anhand eines Ausführungsbeispiels soll die Erfindung näher erläutert werden.

Es zeigen:
Fig. 1 eine Anordnung zur Bitratenanpassung mit der erfindungsgemäßen Stopfentscheidungsschaltung und
Fig. 2 Einzelheiten einer erfindungsgemäßen Stopfentscheidungsschaltung.

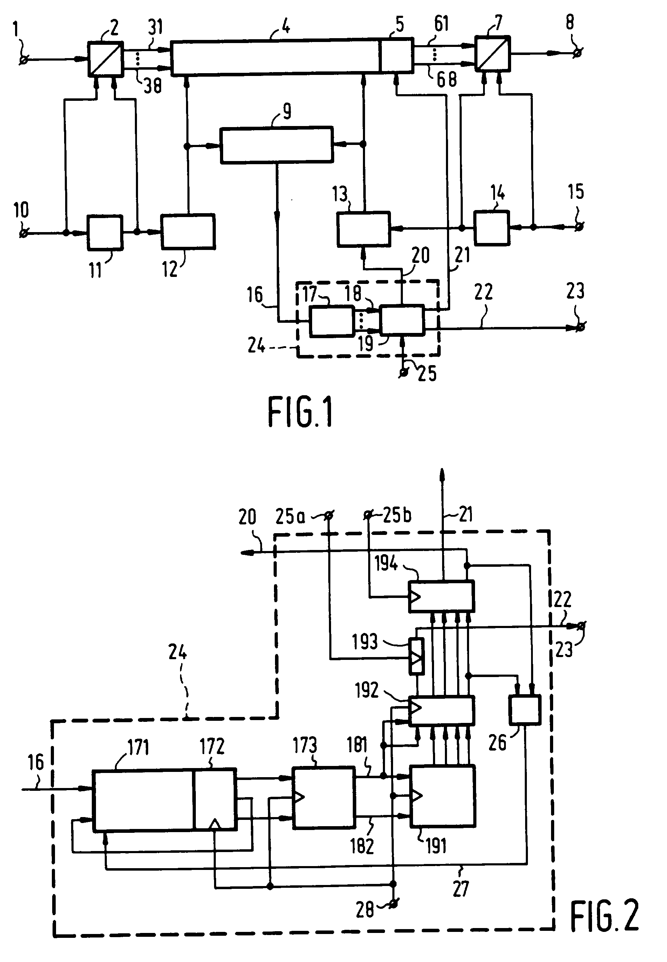

In Fig. 1 liegt an einer Klemme 1 ein erstes binäres Signal mit einer nominellen Bitrate von 139,264 Mbit/s an und an einer Ausgangsklemme 8 ein nach Rahmen strukturiertes zweites binäres Signal mit einer nominellen Bitrate von 155,52 Mbit/s. Das zweite Binärsignal enthält neben sämtlichen Bits des ersten Signals Stopfbits, Stopfinformationsbits sowie weitere Hilfsinformationen. Der Rahmen ist der sogenannte synchrone Transportmodul STM-1 (vergleiche hierzu zum Beispiel die CCITT-Empfehlungsentwürfe G 707, G 708 und G 709); er ist nach Zeilen gegliedert und jede Zeile wiederum ist nach Bytes strukturiert.

An einer Klemme 10 liegt der Bittakt des ersten Signals an. Dieser Takt wird durch einen ersten Teiler 11 im Verhältnis 1:8 untersetzt. Der untersetzte Takt - nachfolgend Schreibtakt genannt - hat eine Impulsfolgefrequenz von 17,408 MHz. Im vorliegenden Beispiel ist also die ganzzahlige Variable n in der allgemeinen Lehre zu acht gewählt.

Mit dem Schreibtakt und dem ursprünglichen Bittakt wird ein Serien-Parallel-Wandler 2 versorgt, der acht serielle Bits des ersten Signals in acht parallele Bits umwandelt, die über Leitungen 31 bis 38 an acht Leseeingänge eines Pufferspeichers 4 geführt werden. Auf jeder der Leitungen 31 bis 38 liegen Bits mit der Folgefrequenz von 17,408 MHz an, so daß alle Bausteine - bis auf einen ausgangsseitigen Parallel-Serien-Wandler 7 und einen ausgangsseitigen Frequenzteiler 14 - in verlustarmer CMOS-Technologie ausgeführt sind.

Mit dem Schreibtakt wird ein erster Adreßzähler 12 - im folgenden Schreibzähler genannt - weitergestellt, der zyklisch Schreibadressen für den acht Bit (1 Byte) breiten Pufferspeicher 4 erzeugt. Unter den vom Schreibzähler 12 erzeugten Schreibadressen wird das erste Signal byteweise im Pufferspeicher 4 abgelegt. Der Bittakt des zweiten Binärsignals, der an einer Klemme 15 anliegt, wird an den zweiten Teiler 14 geleitet, der diesen Takt ebenfalls im Verhältnis 1:8 herunterteilt. Der Bittakt wird von einer Zeitablaufsteuerung eines nicht abgebildeten Multiplexers erzeugt und ist mit Taktlücken versehen, die an vorbestimmten Stellen des Rahmens auftreten, um damit eine grobe Anpassung der Bitraten zu erreichen.

Dieser geteilte Takt - nachfolgend Lesetakt genannt - und der ursprüngliche Bittakt takten den Parallel-Serien-Wandler 7, der das parallel verarbeitete erste Signal in das serielle zweite Signal mit einer Bitrate von 155,52 Mbit/s wandelt und an eine Ausgangsklemme 8 weiterleitet.

Der Lesetakt wird zur zyklischen Erzeugung von Leseadressen durch den Adreßzähler 13 verwendet. Ein Vergleich der Adressen findet in einem Subtrahierer 9 statt, der den Stand des Lesezählers vom Stand des Schreibzählers abzieht. Im vorliegenden Beispiel sind die (nicht gezeigten) Adreßcodierer so konstruiert, daß die Speicherstellen, in die eingeschrieben und die Speicherstellen, aus denen ausgelesen wird, bei gleichem Zählerstand einen festen vorbestimmten Abstand voneinander haben. Dieser Sollabstand ist im Mittel während des gesamten Betriebs der Schaltungsanordnung einzuhalten. Diese Einhaltung erfolgt mit einem Regelkreis, der durch eine Stopfentscheidungsschaltung 24 den Lesezähler 13 und den Subtrahierer 9 gebildet wird. Da der Lesetakt der schnellere Takt ist, wird der Lesezähler 13 von Zeit zu Zeit angehalten, damit sein Stand mit dem Stand des Schreibzählers 12 ungefähr übereinstimmt. Wenn der Unterschied zwischen Schreib- und Lesezähler längere Zeit positiv gewesen ist, wird in das zweite Signal an einer vorbestimmten Stelle ein sogenanntes variables Stopfbit eingefügt, und zwar mit Hilfe einer Auswahlmatrix 5, die von einer Impulsverteilerschaltung 19 zu vorbestimmter Zeit einen Impuls erhält, mit der der Zustand der Auswahlmatrix 5 derart verstellt wird, daß ein Bit auf einer vorbestimmten Leitung der acht parallelen Leitungen wiederholt wird und als Stopfbit mit übertragen wird (wegen der Wirkungsweise der Auswahlmatrix siehe die EP-A-0 404 268). Sind acht Bits gestopft worden, so bekommt der Lesezähler 13 zu einem vorbestimmten Zeitpunkt über eine Leitung 20 von der Impulsverteilerschaltung 19 ein Signal, mit dem er für einen Takt lang angehalten wird. Zur zeitrichtigen Steuerung der Bausteine 5 und 13 erhält die Stopfentscheidungsschaltung von außen - angedeutet durch eine Leitung 25 - Synchronimpulse. Diese Impulse werden ebenfalls von der Zeitablauf steuerung des nicht abgebildeten Multiplexers an die Schaltung 24 übertragen.

Der Regler 17 des Regelkreises ist ein Regler mit I-Verhalten, dessen Ausgangssignal auf Leitungen 18 anliegt, und von der Impulsverteilerschaltung 19 ausgewertet wird. Über eine Leitung 22 gibt die Impulsverteilerschaltung 19 eine Stopfinformation an den nicht gezeigten Multiplexer ab. Diese Stopfinformation läuft über eine Klemme 23 und deutet an, daß wegen des zu großen Abstands der Zählerstände wieder ein Bit gestopft werden muß; sie wird vom Multiplexer in Form von Stopfinformationsbits in den Datenstrom an vorbestimmter Stelle eingefügt.

Fig. 2 zeigt Einzelheiten der Stopfentscheidungsschaltung 24. Die Einordnung der gezeigten Stopfentscheidungsschaltung in die Schaltungsanordnung nach Fig. 1 wird dadurch ohne Schwierigkeiten möglich, daß die Zuleitungen zur Stopfentscheidungsschaltung 24 die gleichen Bezugszeichen haben wie die Zuleitungen in Fig. 1. Bausteine, die nach Fig. 1 eine Funktionseinheit bilden, haben in Fig. 2 Bezugszeichen, die mit den gleichen führenden Ziffern beginnen.

Der Regler 17 mit I-Verhalten besteht aus einem Addierer 171 sowie einem nachgeschalteten Speicher 172. Ein Regler mit I-Verhalten - gemeint ist: auch I-Verhalten oder nur I-Verhalten - ist deshalb erforderlich, weil die Differenz der Zählerstände (ohne Regelung) proportional mit der Zeit wächst. Ein solcher Zeitverlauf ist mit einem Regler ohne I-Verhalten nicht ausregelbar.

Wegen der Rückkopplung des Speichers 172 auf den Eingang des Addierers 171 und der Verbindung des Addierers 171 mit dem Ausgang des Subtrahierers 9 über die Leitung 16 wird mit jedem Takt des Schreibtaktes das Ausgangssignal des Subtrahierers 9 zum Speicherinhalt des Speichers 172 hinzuaddiert. Auf den Speicher 172 folgt ein Zähler 173, der jedesmal dann um eine Einheit heraufgezählt wird, wenn beim Aufsummieren der Differenzen im Speicher 172 ein Übertrag auf die Binärstelle mit höchster Wertigkeit erfolgt. Der erste Zähler 173 wird um eine Einheit heruntergestellt, wenn der Speicher 172 negativ überläuft. Auch der erste Zähler 173 wird mit dem Schreibtakt getaktet, der an einer Klemme 28 anliegt; er zählt die Überträge bei positivem und negativem Überlauf des Speichers 172 und vergrößert auf diese Weise die Breite des Speichers 172. Die Länge des ersten Zählers 173 ist einer der Parameter des Regelkreises (Zeitkonstante), den der Fachmann nach seinem Fachwissen festzulegen hat. Im vorliegenden Beispiel hat der erste Zähler 173 zwölf Stufen. Die Zahl dieser Stufen legt eine vorbestimmte Binärstelle in einem gedanklich beliebig breiten Speicher 173 fest, deren Wertänderung angibt, daßein Stopfbit in den Datenstrom des zweiten Signals eingefügt werden soll (Stopfanforderung). Läuft der Zähler 173 also positiv über, so wird das als Signal dafür gewertet, daß zum nächstmöglichen Zeitpunkt ein Bit gestopft werden muß. Der positive Überlauf wird durch die Verbindung einer Leitung 181 mit dem Enable-Eingang und einem Dateneingang eines Übertragsspeichers 192 festgehalten, der ebenfalls mit dem Schreibtakt getaktet wird. Der Inhalt der ersten Stufe des Übertragsspeichers 192 wird mit einem ersten Synchronimpuls (Zeilenimpuls), der an einer Klemme 25a anliegt, in ein Flip-Flop 193 übernommen und über eine Leitung 22 und eine Klemme 23 an den nicht gezeigten Multiplexer als Stopfinformation weitergegeben. Über Leitungen 181 und 182 ist der erste Zähler 173 mit einem zweiten vierstufigen Zähler 191 verbunden. Auch der zweite Zähler 191 ist ein Vorwärts-Rückwärts-Zähler, der um eine Einheit weitergezählt wird, wenn der erste Zähler 173 positiv überläuft und um eine Einheit nach unten gezählt wird, wenn der Zähler 173 negativ überläuft. Der zweite Zähler 191 zählt die Stopfanforderungen Modulo 8, die ebenfalls in dem Übertragsspeicher 192 abgespeichert werden. Von dort werden sie in einen Zwischenspeicher 194 zu ausgewählten Taktzeitpunkten, die an einer Klemme 25b anliegen, abgespeichert und über die Leitung 21 an die Auswahlmatrix bzw. über die Leitung 20 an den Schreibzähler weitergeleitet. Der Schreibzähler wird immer dann für einen Takt angehalten, wenn die Zahl der Stopfanforderungen ein ganzes Vielfaches von acht überschreitet; gleichzeitig wird der Zustand der Auswahlmatrix derart verändert, daß keine Information verloren geht (vergleiche hierzu die EP-A-0 404 268). Auf der Leitung 20 wird also genau dann ein Impuls abgegeben, wenn von den ersten drei Stufen des Zählers 191 ein Übertrag auf die vierte Stufe erfolgt, der Zähler 191 diesen Übertragsimpuls an den Übertragsspeicher 192 abgegeben hat und an der Klemme 25b ein Synchronimpuls erscheint.

Die Länge des Zähler 173 bestimmt - wie schon angedeutet - die Regelzeitkonstante; je größer der Zähler, umso größer auch die Regelzeitkonstante. Eine große Regelzeitkonstante erniedrigt den Wartezeitjitter des Übertragungssystems (zum Wartezeitjitter vergleiche z.B. die EP-A-0 404 268 und die dort angegebene Literatur zu diesem Thema). Andererseits bedeutet eine große Regelzeitkonstante, daß Differenzen nur langsam ausgeregelt werden und daher Gefahr besteht, daß der Pufferspeicher 4 überläuft, wenn er nicht unvertretbar groß dimensioniert wird.

Um diesem Problem zu begegnen, ist ein Gatter 26 vorgesehen, das den Unterschied der Binärwerte mißt, der zwischen der Leitung 20 und dem entsprechenden Signal vor Übernahme in den Zwischenspeicher 194 auftritt. Dieser Unterschied wird zu den Eingangsdaten des Addierers 171 hinzugezählt und hat die gleiche Wirkung, als ob der Schreibzähler in dem Augenblick angehalten worden wäre, in dem die Stopfanforderungen ein ganzes Vielfaches von 8 überschreiten. Durch diese Maßnahme wird der Wartezeitjitter reduziert, ohne daß die Regelzeitkonstante erhöht wird.

Die Funktion der beschriebenen Schaltung kann auch ganz oder teilweise durch einen entsprechend programmierten Rechner übernommen werden. Das Aufstellen der Programme gehört im vorliegenden Fall zum handwerklichen Können des Fachmanns, da die gesamte Schaltung nur aus elementaren digitalen Bausteinen besteht und deren softwaremäßige Nachbildung entweder aus der Literatur bekannt ist oder auf der Hand liegt (vergleiche als Beispiel: Electronics, October 12 (1978), Seite 148).

## Patentansprüche

1. Anordnung zur Bitratenanpassung zweier Signale mit
- einem elastischen Speicher (4) zur parallelen Einschreibung und zur parallelen Auslesung von Gruppen von je n Bits, n > 1, eines ersten Signals,
- einem Mittel (12) zur Erzeugung von Schreibadressen,
- einem Mittel (13) zur Erzeugung von Leseadressen,
- einem Subtrahierer (9) zur Bildung der Differenz zwischen Lese- und Schreibadressen,
- einer das zweite Signal erzeugenden Auswahlmatrix (5) zum Empfang der ausgelesenen Gruppen von Bits des elastischen Speichers,
- einer Stopfentscheidungsschaltung (24), die
- einen Regelkreis mit dem Subtrahierer (9) und dem Mittel (13) zur Erzeugung von Leseadressen bildet,
- einen Regler (17) mit I-Verhalten zum Empfang des Ausgangssignals des Subtrahierers (9) enthält und
- eine Impulsverteilerschaltung (19) enthält, die bei einem Übertrag an einer vorbestimmten Binärstelle im Ausgangssignal des Reglers (17) zur Abgabe einer Stopfinformation und zur Abgabe eines Signals an die Auswahlmatrix (5) zur Einfügung eines Stopfbits und bei Überschreitung der Anzahl der eingefügten Stopfbits um ein ganzes Vielfaches von n zum Anhalten des Mittels (13) zur Erzeugung von Leseadressen vorgesehen ist, und
- wobei die Auswahlmatrix derart ausgestaltet ist, daß bei Empfang des Signals von der Impulsverteilerschaltung (19) bestimmte Bits von aufeinanderfolgenden Gruppen paralleler Bits verzögert und Stopfbits anstelle der bestimmten Bits eingefügt werden.

2. Anordnung nach Anspruch 1,
dadurch gekennzeichnet,
daß die Impulsverteilerschaltung (19) nach Auftreten eines ersten Synchronimpulses zur Abgabe der Stopfinformation und nach Auftreten eines zweiten, darauffolgenden Synchronimpulses zur Lieferung eines Signals zur Einfügung von Stopfbits an die Auswahlmatrix (5) und eines Signals zum Anhalten des Mittels (13) zum Erzeugen von Leseadressen vorgesehen ist, wenn die Anzahl der eingefügten Stopfbits größer als n ist.

3. Schaltungsanordnung nach Anspruch 2,
dadurch gekennzeichnet,
daß die Impulsverteilerschaltung (19)
- einen zweiten Vorwärts-Rückwärts-Zähler (191), der zur Zählung der Überträge an der vorbestimmten Binärstelle im Ausgangssignal des Reglers (17) und zur gleichzeitigen Berücksichtigung des Vorzeichens des Ausgangssignals vorgesehen ist,
- einen Übertragsspeicher (192) zur Speicherung des Inhaltes des zweiten Zählers (191) sowie des Übertrages und
- einen Zwischenspeicher (193) enthält, der zur Speicherung des von dem Übertragungsspeichers (192) gelieferten Übertrages mit dem ersten Synchronimpuls (25a) und einem weiteren Zwischenspeicher (194) zur Speicherung des restlichen Inhalts des Übertragungsspeichers (192) mit dem zweiten Synchronimpuls (25b) vorgesehen ist.

4. Schaltungsanordnung nach Anspruch 3,
dadurch gekennzeichnet,
daß ein Gatter (26) zur Bildung der Differenz zwischen den Binärwerten am Eingang und am Ausgang für das höchstwertige Bit des Zwischenspeichers (194) vorgesehen ist und daß der Regler (17) zum Empfang dieser Differenz als Eingangsdaten vorgesehen ist.

5. Anordnung zur Bitratenanpassung zweier serieller Signale mit
- einem elastischen Speicher (4) zur Einschreibung von Bits eines ersten seriellen Signals und zur Auslesung von Bits eines zweiten seriellen Signals,
- einem Mittel (12) zur Erzeugung von Schreibadressen,
- einem Mittel (13) zur Erzeugung von Leseadressen,
- einem Subtrahierer (9) zur Bildung der Differenz zwischen Lese- und Schreibadressen,
- einer Stopfentscheidungsschaltung (24), die
- einen Regelkreis mit dem Subtrahierer (9) und dem Mittel (13) zur Erzeugung von Leseadressen bildet,
- einen Regler (17) mit I-Verhalten zum Empfang des Ausgangssignals des Subtrahierers (9) und
- eine Impulsverteilerschaltung (19) enthält, die bei einem Übertrag an einer vorbestimmten Binärstelle im Ausgangssignal des Reglers (17) zur Abgabe einer Stopfinformation und zum Anhalten des Mittels (9) zur Erzeugung von Leseadressen vorgesehen ist.

6. Anordnung nach Anspruch 5,
dadurch gekennzeichnet,
daß die Impulsverteilerschaltung (19) nach Auftreten eines ersten Synchronimpulses zur Abgabe der Stopfinformation und nach Auftreten eines zweiten, darauffolgenden Synchronimpulses zur Lieferung eines Signals zum Anhalten des Mittels (13) zum Erzeugen von Leseadressen vorgesehen ist.

7. Anordnung nach einem der Ansprüche 1 bis 6,
dadurch gekennzeichnet,
daß der Regler (17) aus einem Addierer (171), einem nachgeschalteten Speicher (172) und einem auf den Speicher folgenden Vorwärts-Rückwärts-Zähler (173) besteht, daß Speicher und Addierer so miteinander gekoppelt sind, daß die laufenden Differenzen des Subtrahierers (9) im Speicher (172) akkumuliert werden, und der erste Zähler (173) einen Vorwärtszählimpuls erhält, wenn der Speicher positiv überläuft und einen Rückwärtszählimpuls wenn der Speicher negativ überläuft.

## Claims

1. Arrangement for adapting the bit rate of two signals, comprising
- an elastic store (4) for writing and reading a first signal in parallel groups of n bits each, where n > 1,
- a means (12) for generating write addresses,
- a means (13) for generating read addresses,
- a subtracter (9) for forming the difference between read and write addresses,
- a selection matrix (5) generating the second signal, for receiving the groups of bits read from the elastic store,
- a stuff control circuit (24), which
- forms a control circuit with the subtracter (9) and the means (13) for generating the read addresses,
- a controller (17) with I-behaviour for receiving the output signal of the subtracter (9) and
- a pulse distributor (19) which, in the case of a carry in a predefined bit position in the output signal of the controller (17) distributes a justification indication bit and sends a signal to the selection matrix (5) and to insert a stuff bit for a signal to be fed to the selection matrix (5) and, when the number of inserted stuff bits is exceeded by an integer multiple of n, stops the means (13) for generating read addresses, and
- the selection matrix is arranged in a manner such that, when the signal is received from the pulse distributor (19), certain bits of successive groups of parallel bits are delayed and stuff bits *in lieu of* these certain bits are inserted.

2. Arrangement as claimed in Claim 1, characterised in that after a first sync pulse has occurred, the pulse distributor (19) produces the justification indication bit and, after a second, successive sync pulse has occurred, applies a stuff bit insertion signal to the selection matrix (5) and produces a signal to stop the means (13) for generating read addresses when the number of inserted stuff bits exceeds n.

3. Arrangement as claimed in Claim 2, characterised in that the pulse distributor (19) comprises:
- a second up/down counter (191) which counts the carry bits in the predetermined bit position in the output signal of the controller (17) and simultaneously takes the sign of the output signal into account,
- a carry bit memory (192) for storing the contents of the second counter (191) including the carry bits,
- a buffer memory (193) which stores the carry bits produced by the carry bit memory (192) when the first sync pulse (25a) occurs and a further buffer memory (194) which stores the rest of the contents of the carry bit memory (192) when the second sync pulse (25b) occurs.

4. Arrangement as claimed in Claim 3, characterised in that a gate (26) is included to form the difference between the bit values at the input and output for the most significant bit of the buffer memory (194) and that the controller (17) receives this difference as input data.

5. Arrangement for adapting the bit rate of two signals, comprising
- an elastic store (4) for writing bits of a first serial signal and for reading bits of a second serial signal,
- a means (12) for generating write addresses,
- a means (13) for generating read addresses,
- a subtracter (9) for forming the difference between read and write addresses,
- a stuff control circuit (24), which
- forms a control circuit with the subtracter (9) and the means (13) for generating read addresses,
- a controller (17) with I-behaviour for receiving the output signal of the subtracter (9) and
- a pulse distributor (19) which, in the case of a carry in a predefined bit position in the output signal of the controller (17) distributes a justification indication bit and stops the means (9) to generate read addresses.

6. Arrangement as claimed in Claim 5, characterised in that after a first sync pulse has occurred, the pulse distributor (19) produces the justification indication bit and, after a second, successive sync pulse has occurred, produces a signal to stop the means (13) for generating read addresses.

7. Arrangement as claimed in one of the Claims 1 to 6, characterised in that the controller (17) comprises an adder (171), a memory (172) connected downstream in the circuit and an up/down counter (173) following the memory, in that memory and adder are coupled in a way such that the running differences of the subtracter (9) are accumulated in the memory (172) and the first counter (173) receives an upcounting pulse when the memory has a positive overflow and a downcounting pulse when the memory has a negative overflow.

## Revendications

1. Dispositif d'adaptation du débit binaire de deux signaux, comportant :
- une mémoire élastique (4) pour effectuer une inscription parallèle et une extraction parallèle de groupes de n bits chacun n > 1, d'un premier signal,
- un moyen (12) pour produire des adresses d'écriture,
- un moyen (13) pour produire des adresses de lecture,
- un soustracteur (9) pour former la différence entre les adresses de lecture et d'écriture,
- une matrice de sélection (5) produisant le deuxième signal pour recevoir les groupes de bits extraits de la mémoire élastique,
- un circuit de décision de bourrage (24), qui :
- forme un circuit de régulation avec le soustracteur (9) et avec le moyen (13) pour produire des adresses de lecture,
- contient un régulateur (17) avec une caractéristique intégratrice pour recevoir le signal de sortie du soustracteur (9), et
- contient un circuit distributeur d'impulsions (19), qui est destiné, lors d'un report à un emplacement binaire prédéterminé dans le signal de sortie du régulateur (17), à délivrer une information de bourrage et à délivrer un signal à la matrice de sélection (5) pour introduire un bit de bourrage et, lors du dépassement du nombre de bits de bourrage introduits d'un multiple entier de n, à bloquer le moyen (13) pour la production d'adresses de lecture, et
- la matrice de sélection étant conformée de telle sorte qu'à la réception du signal du circuit distributeur d'impulsions (19), certains bits de groupes successifs de bits parallèles soient retardés et que des bits de bourrage soient introduits à la place des bits déterminés.

2. Dispositif selon la revendication 1, caractérisé en ce que le circuit distributeur d'impulsions (19) est destiné, après apparition d'une première impulsion de synchronisation, à délivrer les informations de bourrage et, après apparition d'une deuxième impulsion de synchronisation suivante, à délivrer un signal pour introduire des bits de bourrage dans la matrice de sélection et un signal pour arrêter le moyen de production d'adresses de lecture, lorsque le nombre de bits de bourrage introduits est supérieur à n.

3. Montage de circuit selon la revendication 2, caractérisé en ce que le circuit distributeur d'impulsions (19) comporte :
- un deuxième compteur/décompteur (191) pour compter les reports à l'emplacement binaire prédéterminé dans le signal de sortie du régulateur (17) et pour tenir compte simultanément du signe du signal de sortie,
- une mémoire de report (192) pour mémoriser le contenu du deuxième compteur (191) ainsi que du report, et
- une mémoire tampon (193), qui est destinée à mémoriser le report délivré par la mémoire de transmission (192) avec la première impulsion de synchronisation (25a) et une autre mémoire tampon (194) pour mémoriser le contenu restant de la mémoire de report (192) avec la deuxième impulsion de synchronisation (25b).

4. Montage de circuit selon la revendication 3, caractérisé en ce qu'une porte (26) est prévue pour former la différence entre les valeurs binaires à l'entrée et à la sortie pour le bit le plus significatif de la mémoire tampon (194) et en ce que le régulateur (17) reçoit cette différence comme données d'entrée.

5. Dispositif d'adaptation du débit binaire de deux signaux sériels, comportant :
- une mémoire élastique (4) pour inscrire des bits d'un premier signal sériel et pour extraire des bits d'un deuxième signal sériel,
- un moyen (12) pour produire des adresses d'écriture,
- un moyen (13) pour produire des adresses de lecture,
- un soustracteur (9) pour former la différence entre les adresses de lecture et d'écriture,
- un circuit de décision de bourrage (24), qui :
- forme un circuit de régulation avec le soustracteur (9) et avec le moyen (13) de production des adresses de lecture,
- contient un régulateur (17) à caractéristique intégratrice pour la réception du signal de sortie du soustracteur (9), et
- un circuit distributeur d'impulsions (19), qui est destiné, lors d'un report à un emplacement binaire prédéterminé dans le signal de sortie du régulateur (17), à délivrer des informations de bourrage et à arrêter le moyen (13) de production d'adresses de lecture.

6. Dispositif selon la revendication 5, caractérisé en ce que le circuit distributeur d'impulsions (19) est destiné, après apparition d'une première impulsion de synchronisation, à délivrer des informations de bourrage et, après apparition d'une deuxième impulsion de synchronisation suivante, à délivrer un signal pour arrêter le moyen (13) de production des adresses de lecture.

7. Dispositif selon l'une quelconque des revendications 1 à 6, caractérisé en ce que le régulateur (17) est constitué d'un additionneur (171), d'une mémoire (172) montée en aval et d'un compteur/décompteur (173) suivant la mémoire, en ce que la mémoire et l'additionneur sont couplés l'un à l'autre de telle sorte que les différences courantes du soustracteur (9) soient accumulées dans la mémoire (172) et en ce que le premier compteur (173) reçoit une impulsion de comptage, lorsque la mémoire déborde de manière positive, et une impulsion de décomptage lorsque la mémoire déborde de manière négative.
